# EUROPÄISCHE PATENTSCHRIFT

(11) **EP 0 291 496 B1**
(45) Veröffentlichungstag und Bekanntmachung des Hinweises auf die Patenterteilung: **03.02.1993**
(21) Anmeldenummer: 88890111.3
(22) Anmeldetag: 09.05.1988
(51) Int. Cl.: H01M 4/02, H01M 4/70, H01M 10/36

(54) **Metall/Halogen-Batterie**
Metal-halogen battery
Batterie métal-halogène

(30) Priorität: 14.05.1987 AT 1225/87
(43) Veröffentlichungstag der Anmeldung: 17.11.1988
(73) Patentinhaber: S.E.A. Studiengesellschaft für Energiespeicher und Antriebssysteme Gesellschaft m.b.H., A-8680 Mürzzuschlag (AT)
(72) Erfinder: Tomazic, Gerd, Dr.Dipl.-Ing., A-8680 Mürzzuschlag (AT)
(74) Vertreter: Widtmann, Georg, Dr.

(56) Entgegenhaltungen:
- EP-A- 0 109 807
- EP-A- 0 149 448
- EP-A- 0 171 285
- US-A- 4 117 065
- US-A- 4 649 022
- PATENT ABSTRACTS OF JAPAN, Band 10, Nr. 363 (E-461)[2420], 5. Dezember 1986; & JP-A-61 158 673 (MEIDENSHA ELECTRIC MFG CO. LTD) 18-07-1987
- PATENT ABSTRACTS OF JAPAN, Band 6, Nr. 215 (E-138)[1093], 28. Oktober 1982; & JP-A-57 119 461 (MEIDENSHA K.K.) 24-07-1982

## Beschreibung

Es sind verschiedene Ausführungsformen von Elektroden bekannt geworden, die eine vergrößerte Oberfläche aufweisen. So wird in der JP-A-61-158673 eine Elektrode beschrieben, die an ihrer Oberfläche ein Faservlies aufweist. Die Fasern selbst sind weiters noch porös und weisen zumindest einen Porendurchmesser von 1 Å auf. Ein derartiges Faservlies, insbesondere mit porösen Fasern gewährleistet keine sichere mechanische Verankerung der abgeschiedenen Metallfilme.

Zur Vergrößerung der Oberfläche ist es auch bekannt, gemäß EP-A-109.807 bzw. US-A-4,117.065 Kohlenstoff oder Siliciumdioxid in der Oberfläche einzubetten. Auch in diesen beiden Fällen liegt lediglich eine Vergrößerung der Oberfläche vor, hingegen eine stabile mechanische Verankerung der abzuscheidenden Metallschichte kann auch hier nicht erreicht werden, sondern es soll lediglich die Haftung bzw. die Haftungsfläche vergrößert werden.

Die vorliegende Erfindung hat sich zur Aufgabe gestellt, die Betriebssicherheit von Metall/Halogen-Batterien zu erhöhen und die Empfindlichkeit bezüglich Temperaturschwankungen zu verringern. Es hat sich gezeigt, daß Störungsfälle bei Zink/Brom-Batterien insbesondere dann auftreten, wenn Temperaturschwankungen bzw. Unterschiede zwischen Laden und Entladen auftreten.

Eine weitere Aufgabe besteht darin, Beschränkungen der Kapazität welche auf die metallischen Abscheidungen zurückzuführen sind zu verhindern.

Die erfindungsgemäße Metall/Halogen-, insbesondere Zink/Brom-Batterie, mit Elektroden, gegebenenfalls bipolaren Elektroden, zwischen welchen Separatoren angeordnet sind, wobei die Separatoren an ihren Enden miteinander verbunden z.B. verschweißt, sind, und die Elektroden an deren Oberfläche das Metall abgeschieden wird, mit kunststoffgebundenen Kohlenstoff, insbesondere Graphit, aufgebaut sind, besteht im wesentlichen darin, daß aus der Oberfläche der Elektroden eine Vielzahl von Verankerungselementen in Form von Sphäroiden, insbesondere Kugeln ragen, die teilweise in der Oberfläche der Elektrode eingebettet sind, welche mit ihrem Äquator aus der Oberfläche für das abzuscheidende Metall ragen, die an der Oberfläche eine geringere Querschnittsfläche als an oberflächenfernen Bereichen in etwa parallel zu Oberfläche außerhalb der Elektrode aufweisen, wobei die Verankerungselemente elektrisch leitfähig, insbesondere Leiter erster Klasse sind und/oder die Verankerungselemente mit einem organischen Kunststoff, insbesondere Polyäthylen, aufgebaut sind. Durch diese Maßnahme wird eine stabile mechanische Verankerung des Zinkfilms an der Elektrodenoberfläche erreicht, wobei selbst Temperaturschwankungen oder dgl. ausgeglichen werden können. Bislang wurde im wesentlichen davon ausgegangen, daß elektrochemisch abgeschiedene einheitliche Schichten, also Schichten, die kein wesentliches Dendriten-Wachstum aufweisen, eine ausreichende Adhäsion an der Elektrodenoberfläche besitzen. Diese ausreichende Adhäsion wurde selbst bei oleophilen Oberflächen angenommen. Diese Annahme wurde auch noch durch das Gedankenexperiment bestärkt, daß der abgeschiedene Film, so er sich von der Oberfläche ablöst ein Vakuum oder zumindest einen Unterdruck zwischen Metallschichte und Elektrodenoberfläche bedingen würde. Es hat sich nun aufgrund langwieriger Untersuchungen gezeigt, daß sich die Metallschichten zumindest teilweise von den Elektrodenoberflächen ablösen und daß zwischen der Metallschichte und der Elektrodenoberfläche Elektrolytflüssigkeit eintreten kann, sodaß nicht nur ein erhöhter Widerstand in der Elektrode auftritt, sondern daß ein weiteres elektrochemisch wirksames Element auftritt, wodurch gespeicherte chemische Energie aufgebraucht wird. Dieser zusätzliche elektrochemische Effekt kann sogar zu einem totalen Zusammenbruch der Zink/Brom-Batterie führen, sodaß trotz hohen Ladungszustand der Batterie kein Strom mehr entnommen werden kann. Es hat sich nunmehr gezeigt, daß durch eine völlig überraschend einfache Maßnahme und zwar daß eine Vielzahl von mechanischen Verankerungselementen vorgesehen sind, die mit ihrem Äquator aus der Oberfläche ragen diese Störungen der Kapazität bzw. der Zusammenbruch der Kapazität vermieden werden kann. Trotz der unterschiedlichen Wärmedehnungskoeffizienten zwischen Metall und kunststoffgebundenen Elektrode kann ein ausreichend auch elektrisch leitender Kontakt zwischen Metallfilm und Elektrode erreicht werden, wobei selbst ungleichmäßige elektrochemische Auflösungen der Metallschicht, wie sie beispielsweise durch Spitzenwirkungen und dgl. eintreten können, keine Störungen verursachen.

Sind die Verankerungselemente mit einem organischen Kunststoff, insbesondere Polyäthylen, aufgebaut, so kann eine besonders gute Integrierung derselben in der Elektrode erreicht werden, womit auch hier eine besonders beanspruchbare Verankerung der Metallschichte erreicht werden kann.

Werden die Verankerungselemente teilweise in den Kunststoff der Elektrode eingebettet, so ist eine besonders mechanisch stabile Einbettung der Verankerungselemente gewährleistet.

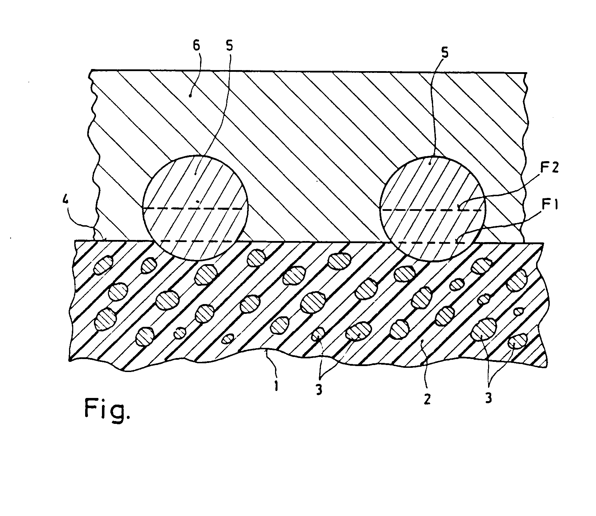

Im folgenden wird die Erfindung an Hand der Zeichnung näher erläutert. Es zeigt die einzige Figur den Querschnitt einer Elektrode mit sphärischen Verankerungselementen.

Den in der Zeichnung dargestellten schematischen Schnitt einer Elektrode und zwar mit jener Oberflächenseite, die zur Abscheidung der metallischen Komponente dient, sind für Zink/Brom-Batterie besonders geeignet, wie sie beispielsweise in den EP-A-207 057, EP-A-149 448 und EP-A-167 517 beschrieben sind. Diese Systeme weisen zwei Kreisläufe, und zwar für den Anolyten und Katholyten auf, welche mit eigenen Pumpen bewerkstelligt werden. Die einzelnen Katholyt- und Anolyträume werden über entsprechende Zu- und Ableitungen mit dem Reservoir für den Elektrolyten verbunden. Die Elektroden dienen jeweils als bipolare Elektroden. Die Elektroden sind in Serie geschaltet. Zur Vermeidung von Nebenschlußströmen können Kompensationsschaltungen, und zwar sowohl über Leiter erster als auch zweiter Ordnung vorgesehen sein. Derartige Kompensationsschaltungen sind inbesondere für höhere Spannungen von Bedeutung.

Bei dem in der Figur dargestellten Schnitt eines Bereiches einer Elektrode 1 sind im Kunststoff 2 elektrisch leitfähige Partikel 3 aus Aktivkohle bzw. Graphit eingebettet. Der Kunststoff kann beispielsweise aus Polyäthylen oder Polypropylen bestehen, wobei beide Kunststoffarten besonders resistent gegen molekulare Halogene wie beispielsweise Brom sind. In die Elektrodenoberfläche 4 sind Verankerungselemente 5 in Form von Sphäroiden,und zwar Kugeln,durch Heißeinpressen verankert. Die Kugeln können beispielsweise aus Polypropylen oder Polyäthylen bestehen, im vorliegenden Fall sind sie aus einem Leiter erster Klasse, und zwar aus Kohlenstoff, aufgebaut. Wie deutlich ersichtlich, ist die Querschnittsfläche F1, welche sich entlang der Oberfläche der Elektrode 4 befindet, kleiner als die Äquatorfläche F2. Dementesprechend ist die abgeschiedene Metallschicht 6 durch die Verankerungskörper gegen die Oberfläche der Elektrode gehalten, sodaß ein Ablösen selbst durch thermische Spannungen nicht erfolgen kann. Selbt bei großen Temperaturschwankungen zwischen Auf- und Entladen, und zwar von 45 °C, konnten keine Ablösungen, die sich durch Schwankungen in der Kapazität bemerkbar machen, beobachtet werden.

## Patentansprüche

1. Metall/Halogen-, insbesondere Zink/Brom-Batterie, mit Elektroden, gegebenenfalls bipolaren Elektroden (1), zwischen welchen Separatoren angeordnet sind, wobei die Separatoren an ihren Enden miteinander verbunden, z.B. verschweißt,sind, und die Oberfläche der Elektroden (1), an welcher das Metall abgeschieden wird, mit kunststoffgebundenen Kohlenstoff, insbesondere Graphit, aufgebaut sind, dadurch gekennzeichnet, daß aus der Oberfläche (4) der Elektroden (1) eine Vielzahl von Verankerungselementen (3) in Form von Sphäroiden, insbesondere Kugeln (5) ragen, die teilweise in die Oberfläche (4) der Elektroden (1) eingebettet sind, welche mit ihrem Äquator aus der Oberfläche (4) für das abzuscheidende Metall (6) ragen, die an der Oberfläche eine geringere Querschnittsfläche als an oberflächenfernen Bereichen in etwa parallel zu Oberfläche (4) außerhalb der Elektroden aufweisen, wobei die Verankerungselemente (3) elektrisch leitfähig, insbesondere Leiter erster Klasse sind und/oder die Verankerungselemente (3) mit einem organischen Kunststoff, insbesondere Polyäthylen, aufgebaut sind.

2. Metall/Halogen-Batterien nach Anspruch 1, dadurch gekennzeichnet, daß die Verankerungselemente (5) teilweise in den Kunststoff der Elektrode (1) eingebettet sind.

## Claims

1. A metal/halogen battery, in particular a zinc/bromine battery, having electrodes, if necessary bipolar electrodes (1), between which separators are arranged, the separators being connected, e.g., welded together at their ends and the surface of the electrodes (1) upon which the metal is precipitated being built up of plastics-bonded carbon, in particular graphite,
characterized in that from the surface (4) of the electrodes (1) a plurality of anchoring elements (3) project in the form of spheroids, especially bails (5) which are partially embedded in the surface (4) of the electrodes (1) but at their equators project from the surface (4) for the metal (6) which is to be precipitated, and exhibit at the surface a smaller cross-sectional area than at regions outside the electrodes approximately parallel with and remote from the surface (4), the anchoring elements (3) being electrically conductive, in particular first class conductors, and/or the anchoring elements (3) being built up of an organic plastics, in particular polyethylene.

2. A metal/halogen battery as in Claim 1, characterized in that the anchoring elements (5) are partially embedded in the plastics of the electrode (1).

## Revendications

1. Accumulateur métal/halogène, en particulier zinc/brome, comportant des électrodes (1), éventuellement bipolaires, entre lesquelles sont disposés des séparateurs, ces séparateurs étant liés les uns aux autres à leurs extrémités, par exemple soudés, et les surfaces des électrodes (1) sur lesquelles doit être déposé le métal étant constituées de carbone, en particulier de graphite, lié par une matière plastique, caractérisé en ce que font saillie, à la surface (4) des électrodes (1), un grand nombre d'éléments d'ancrage (5) en forme de sphéroïdes, en particulier de sphères (5), qui sont partiellement noyés à la surface (4) des électrodes (1), dont le plan équatorial se situe au-dessus de la surface (4) sur laquelle sera déposé le métal, et qui présentent, au niveau de cette surface, une aire de section plus faible que dans des zones éloignées de la surface, situées à peu près parallèlement à la surface (4) en dehors des électrodes, ces éléments d'ancrage (5) étant des conducteurs électriques, en particulier des conducteurs de première classe, et/ou ces éléments d'ancrage (5) étant constitués d'une matière plastique organique, en particulier de polyéthylène.

2. Accumulateurs métal/halogène conformes à la revendication 1, caractérisés en ce que les éléments d'ancrage (5) sont partiellement noyés dans la matière plastique de l'électrode (1).
